# EUROPEAN PATENT SPECIFICATION

(11) **EP 4 059 409 B1**
(45) Date of publication and mention of the grant of the patent: **08.11.2023**
(21) Application number: 22158708.2
(22) Date of filing: 25.02.2022
(51) Int. Cl.: A47L 15/42, A47L 15/48

(54) **A DISHWASHER PROVIDING HEAT RECOVERY**
GESCHIRRSPÜLMASCHINE MIT WÄRMERÜCKGEWINNUNG
LAVE-VAISSELLE FOURNISSANT UNE RÉCUPÉRATION DE CHALEUR

(30) Priority: 19.03.2021 TR 202105091
(43) Date of publication of application: 21.09.2022
(73) Proprietor: Arçelik Anonim Sirketi, 34445 Istanbul (TR)
(72) Inventor: POYRAZ, Onur, 34445 ISTANBUL (TR); MORDOGAN, Umut, 34445 ISTANBUL (TR); BALIKCI, Ilhan, ISTANBUL Istanbul (TR)

(56) References cited:
- EP-A2- 1 142 527
- EP-A2- 1 690 489
- WO-A1-2017/022975
- CN-U- 201 861 600
- DE-A1- 3 842 997
- DE-A1- 4 037 367
- US-A1- 2013 152 967

## Description

The present invention relates to a dishwasher providing heat recovery.

In dishwashers, the dishes are placed onto the racks provided in the washing tub. The cleaning process is performed by delivering water onto the racks by means of the spraying member. In certain programs, the water is heated before being delivered onto the dishes. Thus, a more effective cleaning is performed. In some dishwashers, the water taken from the mains is collected in a water pocket. The water pocket is disposed between the body and the washing tub. Heat exchange occurs between the water pocket and the washing tub. Thus, the water in the water pocket is heated a little. Energy is saved by heating the water before taking into the washing tub. In the state of the art, there are dishwashers wherein the dirty and hot water leaving the washing tub is used to heat the water in the water pocket by means of a line provided on the water pocket. The hot and dirty water used in the washing process flows through a line provided on the water pocket such that heat exchange occurs between the cold water in the water pocket and the hot and dirty water. Thus, heat recovery is provided. However, while the heat recovery process continues, the total cycle duration of the dishwasher increases.

In the state of the art Patent Application No. DE102010029873, a dishwasher is disclosed, wherein the waste water is collected and heated.

The aim of the present invention is the realization of a dishwasher wherein saving in energy and time is provided.

The dishwasher realized in order to attain the aim of the present invention, explicated in the first claim and the respective claims thereof, comprises a body; a washing tub which is disposed in the body; a sump which is disposed on the base of the washing tub; at least one spraying member which sprays the water coming from the sump into the washing tub; at least one circulation pump which enables the water to be transferred from the sump to the spraying member; a heater which is disposed on the circulation pump; a multiport valve which is disposed between the circulation pump and the spraying member; a discharge pump which is connected to the sump; a drying fan which sucks the air in the washing tub at the drying step; a component body which is provided under the washing tub; and a water pocket which is disposed between the washing tub and the body. The water passing through the circulation pump is heated by means of the heater and then delivered to the spraying member. The water is sprayed onto the dishes by means of the spraying members. The spraying member which receives the water is determined by means of the multiport valve. The water pocket is filled the water taken from the mains to be used in the washing process. The component body comprising the discharge pump, the sump, the circulation pump, the heater, the multiport valve and the drying fan is disposed under the body.

The dishwasher of the present invention comprises an air duct which extends from the component body towards the water pocket. The air duct provides the delivery of the hot air in the component body to the water pocket. Thus, the water in the water pocket is heated.

In an embodiment of the present invention, the dishwasher comprises the air duct which has a serpentine section at the water pocket. Thus, the surface area of the air duct carrying the hot air is increased, which in turn increases the heat exchange between the water pocket and the air duct.

In an embodiment of the present invention, the dishwasher comprises a first fan which is disposed in the component body. The first fan is positioned close to the end of the air duct. Thus, the first fan sucks the hot air emanating from the components in the component body, and directs the same to the air duct.

In an embodiment of the present invention, the dishwasher comprises the air duct which returns to the component body after passing through the water pocket. Thus, the hot air flowing through the air duct returns to the component body. Consequently, heat recovery continues without any interruption.

In an embodiment of the present invention, the dishwasher comprises a second fan which is disposed close to the end of the air duct leaving the water pocket. By means of the second fan disposed close to the end of the air duct leaving the water pocket, the hot air on the air duct is sucked. Thus, the hot air is enabled to be moved from the component body towards the water pocket.

In an embodiment of the present invention, the dishwasher comprises a drying duct which is connected to the drying fan, a shutter which directs the air in the drying duct, and the air duct which is connected to the shutter. Thus, the hot air in the drying duct is enabled to flow through the air duct. Consequently, the water in the water pocket is heated.

In an embodiment of the present invention, the dishwasher comprises an additional heater which is disposed on the air duct. Thus, the temperature of the air in the air duct is increased, enabling the water in the water pocket to be heated more quickly and efficiently.

By means of the present invention, a dishwasher is realized, comprising an air duct which enables the water in the water pocket to be heated with the heat of the components.

A dishwasher realized in order to attain the aim of the present invention is illustrated in the attached figures, where:
Figure 1 - is the schematic view of the dishwasher.
Figure 2 - is the schematic view of the serpentine air duct and the first fan in the dishwasher.
Figure 3 - is the schematic view of the second fan on the water pocket in the dishwasher.
Figure 4 - is the schematic view of the air duct returning to the component body in the dishwasher.
Figure 5 - is the schematic view of the air duct on the drying duct in the dishwasher.

The elements illustrated in the figures are numbered as follows:
1. Dishwasher
2. Body
3. Washing tub
4. Sump
5. Spraying member
6. Circulation pump
7. Heater
8. Multiport valve
9. Discharge pump
10. Drying fan
11. Component body
12. Water pocket
13. Air duct
14. First fan
15. Drying duct
16. Shutter
17. Additional heater
18. Second fan

The dishwasher (1) comprises a body (2); a washing tub (3) which is disposed in the body (2) and wherein the washing process is performed; a sump (4) which is disposed on the base of the washing tub (3) and wherein the water coming from the washing tub (3) is collected; at least one spraying member (5) which is disposed in the washing tub (3) and which sprays the water coming from the sump (4) onto the kitchen items; a circulation pump (6) which enables the water to be transferred from the sump (4) to the spraying member (5); a heater (7) which is disposed on the circulation pump (6); a multiport valve (8) which is disposed between the circulation pump (6) and the spraying member (5) and which directs the water to the spraying member (5); a discharge pump (9) which is connected to the sump (4) and which discharges the dirty water; a drying fan (10) which sucks the humid air in the washing tub (3) at the drying step; a component body (11) which is provided under the washing tub (3) and which contains the discharge pump (9), the sump (4), the circulation pump (6), the heater (7), the multiport valve (8) and the drying fan (10); and a water pocket (12) which is disposed between the washing tub (3) and the body (2) and wherein the water is collected to be used in the washing process. The water is taken from the mains into the sump (4). The water in the sump (4) is heated by means of the heater (7) while passing through the circulation pump (6), and then delivered to the multiport valve (8). By means of the multiport valve (8), it is determined which spraying member (5) receives the water. The water taken from the mains into the water pocket (12) is kept therein to be used in the washing process. The component body (11) is disposed under the washing tub (3). By means of the component body (11), the waste heat generated during the operation of the sump (4), the circulation pump (6), the heater (7) and the multiport valve (8) is not discharged to the outer environment.

The dishwasher (1) of the present invention comprises an air duct (13) which opens into the component body (11) at one end and which extends towards the water pocket (12). By means of the air duct (13) opening into the component body (11), the hot air collected in the component body (11) is directed. The waste heat generated due to the operation of the components is transferred to the water pocket (12) by means of the air duct (13). Thus, the water kept in the water pocket (12) is heated before the washing process. Moreover, the user satisfaction is improved by preventing the component heat from being discharged to the environment.

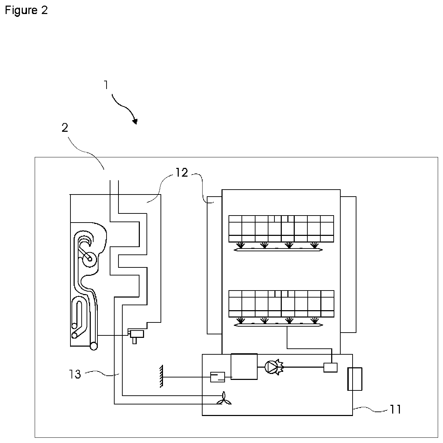

In an embodiment of the present invention, the dishwasher (1) comprises the air duct (13) which has a serpentine section at the water pocket (12). The section of the air duct (13) in contact with the water pocket (12) is serpentine. Thus, the thermal contact area between the air duct (13) and the water pocket (12) is increased which in turns increases the heat exchange (Figure 2).

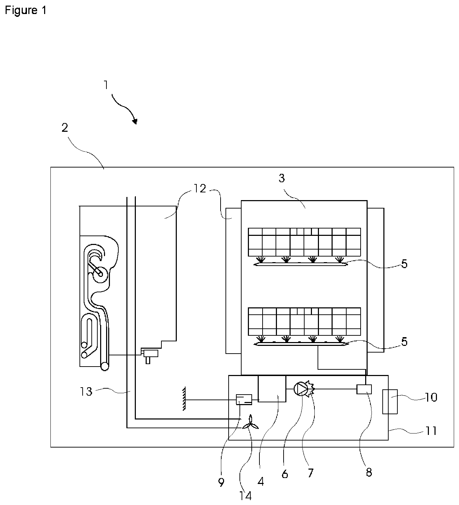

In an embodiment of the present invention, the dishwasher (1) comprises a first fan (14) which is disposed in the component body (11) close to the end of the air duct (13). By means of the first fan (14) in the component body (11), the hot air generated in the component body (11) is collected and directed to the air duct (13). Thus, the hot air is enabled to be used more efficiently (Figure 1).

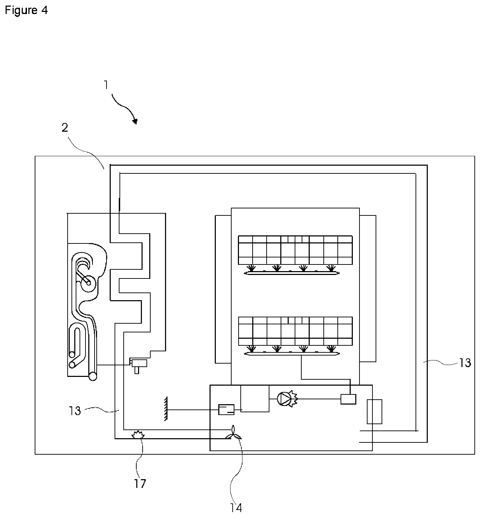

In an embodiment of the present invention, the dishwasher (1) comprises the air duct (13) which returns to the component body (11) after passing through the water pocket (12). The air duct (13) returns to the component body (11) after passing through the water pocket (12). Thus, the hot air can be used more than once, and the temperature thereof is increased. Consequently, the water in the water pocket (12) is heated more (Figure 4).

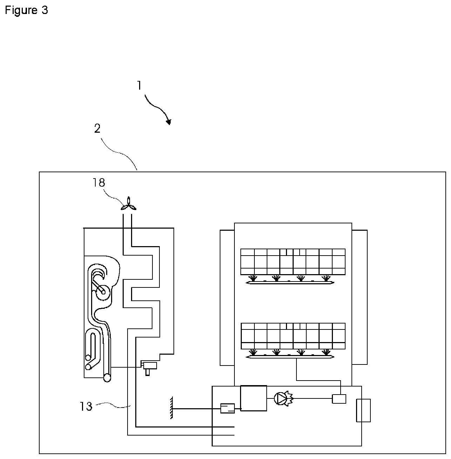

In an embodiment of the present invention, the dishwasher (1) comprises a second fan (18) which is disposed close to the end of the air duct (13) leaving the water pocket (12). By means of the second fan (18) disposed closed to the end of the air duct (13) leaving the water pocket (12), the hot air generated in the component body (11) is sucked towards the water pocket (12). By positioning the second fan (18) on the water pocket (12), the mounting space in the component body (11) is prevented from getting crammed, thus providing ease of service (Figure 3).

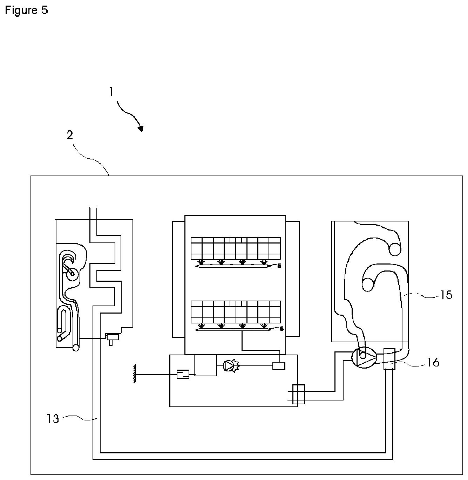

In an embodiment of the present invention, the dishwasher (1) comprises a drying duct (15) which opens to the washing tub (3) at both ends and which is connected to the drying fan (10), a shutter (16) which directs the air coming from the drying duct (15), and the air duct (13) which is connected to the shutter (16). By means of the drying duct (15), the humid air in the washing tub (3) is sucked, thus ensuring the drying of the dishes. By means of the air duct (13) opening to the shutter (16), the heat of the air in the drying duct (15) can be used together with the heat of the components. Thus, the water collected in the water pocket (12) is enabled to be heated more quickly and efficiently (Figure 5).

In an embodiment of the present invention, the dishwasher (1) comprises an additional heater (17) which is disposed on the air duct (13). By means of the additional heater (17), the temperature of the air on the air duct (13) is increased.

By means of the present invention, a dishwasher (1) is realized, wherein the water collected in the water pocket (12) is heated by directing the hot air generated due to the operation of the components. Thus, the water in the water pocket (12) reaches a certain temperature value before being used in the washing process, providing saving in time and energy.

## Claims

1. A dishwasher (1) comprising a body (2); a washing tub (3) which is disposed in the body (2) and wherein the washing process is performed; a sump (4) which is disposed on the base of the washing tub (3) and wherein the water coming from the washing tub (3) is collected; at least one spraying member (5) which is disposed in the washing tub (3) and which sprays the water coming from the sump (4) onto the kitchen items; a circulation pump (6) which enables the water to be transferred from the sump (4) to the spraying member (5); a heater (7) which is disposed on the circulation pump (6); a multiport valve (8) which is disposed between the circulation pump (6) and the spraying member (5) and which directs the water to the spraying member (5); a discharge pump (9) which is connected to the sump (4) and which discharges the dirty water; a drying fan (10) which sucks the humid air in the washing tub (3) at the drying step; a component body (11) which is provided under the washing tub (3) and which contains the discharge pump (9), the sump (4), the circulation pump (6), the heater (7), the multiport valve (8) and the drying fan (10); and a water pocket (12) which is disposed between the washing tub (3) and the body (2) and wherein the water is collected to be used in the washing process, **characterized by** an air duct (13) which opens into the component body (11) at one end and which extends towards the water pocket (12).

2. A dishwasher (1) as in Claim 1, **characterized by** the air duct (13) which has a serpentine section at the water pocket (12).

3. A dishwasher (1) as in Claim 1 or Claim 2, **characterized by** a first fan (14) which is disposed in the component body (11) close to the end of the air duct (13).

4. A dishwasher (1) as in any one of the Claim 1 to Claim 3, **characterized by** the air duct (13) which returns to the component body (11) after passing through the water pocket (12).

5. A dishwasher (1) as in Claim 1 or Claim 2, **characterized by** a second fan (18) which is disposed close to the end of the air duct (13) leaving the water pocket (12).

6. A dishwasher (1) as in any one of the above claims, **characterized by** a drying duct (15) which opens to the washing tub (3) at both ends and which is connected to the drying fan (10), a shutter (16) which directs the air coming from the drying duct (15), and the air duct (13) which is connected to the shutter (16).

7. A dishwasher (1) as in any one of the above claims, **characterized by** an additional heater (17) which is disposed on the air duct (13).

## Patentansprüche

1. Eine Geschirrspülmaschine (1), **bestehend** aus einem Gehäuse (2); eine Spülwanne (3), die im Gehäuse (2) angeordnet ist und in der der Spülvorgang durchgeführt wird; einen Auffangbehälter (4), der am Boden des Spülwanne (3) angeordnet ist und in dem das aus der Spülwanne (3) kommende Wasser gesammelt wird; mindestens ein Sprühorgan (5), das in der Spülwanne (3) angeordnet ist und das aus der Wanne (4) kommende Wasser auf das Geschirrgut sprüht; eine Umwälzpumpe (6), die die Übertragung des Wassers vom Wanne (4) zum Sprühorgan (5) ermöglicht; eine Heizung (7), die an der Umwälzpumpe (6) angeordnet ist; ein Mehrwegeventil (8), das zwischen der Umwälzpumpe (6) und dem Sprühelement (5) angeordnet ist und das Wasser zum Sprühelement (5) leitet; eine Entleerungspumpe (9), die mit der Wanne (4) verbunden ist und das Schmutzwasser abführt; ein Trocknungsgebläse (10), das beim Trocknungsschritt die feuchte Luft in der Spülwanne (3) ansaugt; einen Bauteilkörper (11), der unter dem Spülwanne (3) vorgesehen ist und die Ablaufpumpe (9), die Wanne (4), die Umwälzpumpe (6), die Heizung (7), das Mehrwegeventil (8) und das Trocknungsgebläse (10) enthält; und eine Wasserbehälter (12), die zwischen der Waschwanne (3) und dem Körper (2) angeordnet ist und in der das Wasser gesammelt wird, um es für den Spülvorgang zu verwenden, **gekennzeichnet durch** einen Luftkanal (13), der an einem Ende in den Komponentenkörper (11) mündet und sich in Richtung der Wasserbehälter (12) erstreckt.

2. Ein Geschirrspüler (1) nach Anspruch 1, ist **gekennzeichnet durch** den Luftkanal (13), der an den Wasserbehälter (12) einen schlangenförmigen Abschnitt aufweist.

3. Eine Geschirrspülmaschine (1) nach Anspruch 1 oder Anspruch 2, ist **gekennzeichnet durch** einen ersten Ventilator (14), der im Komponentenkörper (11) nahe dem Ende des Luftkanals (13) angeordnet ist.

4. Ein Geschirrspüler (1) nach einem der Ansprüche 1 bis 3, ist **gekennzeichnet durch** den Luftkanal (13), der nach dem Durchströmen der Wasserbehälter (12) zum Komponentenkörper (11) zurückkehrt.

5. Ein Geschirrspüler (1) nach Anspruch 1 oder Anspruch 2, ist **gekennzeichnet durch** einen zweiten Ventilator (18), der nahe dem Ende des Luftkanals (13) angeordnet ist, der den Wasserbehälter (12) verlässt.

6. Eine Geschirrspülmaschine (1) nach einem der vorstehenden Ansprüche, ist **gekennzeichnet durch** einen Trocknungskanal (15), der an beiden Enden zum Spülwanne (3) mündet und mit dem Trocknungsgebläse (10) verbunden ist, eine Klappe (16), die die aus dem Trocknungskanal (15) kommende Luft leitet, und den Luftkanal (13), der mit der Klappe (16) verbunden ist.

7. Eine Geschirrspülmaschine (1) nach einem der oben genannten Ansprüche, ist **gekennzeichnet durch** eine Zusatzheizung (17), die am Luftkanal (13) angeordnet ist.

## Revendications

1. Un lave-vaisselle (1) **comprenant** un corps (2) ; une cuve de lavage (3) disposée dans le corps (2) et dans laquelle le processus de lavage est effectué ; un puisard (4) disposé à la base de la cuve de lavage (3) et dans lequel l'eau provenant de la cuve de lavage (3) est recueillie ; au moins un élément de pulvérisation (5) disposé dans la baignoire (3) et qui pulvérise l'eau provenant du puisard (4) sur les articles de cuisine ; une pompe de circulation (6) qui permet de transférer l'eau du puisard (4) à l'élément de pulvérisation (5) ; un chauffage (7) placé sur la pompe de circulation (6) ; une vanne multivoies (8) placée entre la pompe de circulation (6) et l'élément de pulvérisation (5) et qui dirige l'eau vers l'élément de pulvérisation (5) ; une pompe d'évacuation (9) reliée au puisard (4) et qui évacue l'eau sale ; un ventilateur de séchage (10) qui aspire l'air humide dans la baignoire (3) lors de l'étape de séchage ; un corps d'élément (11) qui est prévu sous la baignoire (3) et qui contient la pompe de refoulement (9), le puisard (4), la pompe de circulation (6), le chauffage (7), la vanne multivoies (8) et le ventilateur de séchage (10); et une poche à eau (12) qui est disposée entre la baignoire (3) et le corps (2) et dans laquelle l'eau est recueillie pour être utilisée dans le processus de lavage, **caractérisée par** un conduit d'air (13) qui débouche dans le corps du composant (11) à une extrémité et qui s'étend vers la poche à eau (12).

2. Un lave-vaisselle (1) selon la déclaration 1, **caractérisé par** le conduit d'air (13) qui présente une section en serpentin au niveau de la poche à eau (12).

3. Un lave-vaisselle (1) selon la déclaration 1 ou la déclaration 2, **caractérisé par** un premier ventilateur (14) qui est disposé dans le corps de l'élément (11) à proximité de l'extrémité du conduit d'air (13).

4. Un lave-vaisselle (1) selon l'une quelconque des déclarations 1 à 3, **caractérisé par** le conduit d'air (13) qui retourne dans le corps de l'élément (11) après avoir traversé la poche à eau (12).

5. Un lave-vaisselle (1) selon la déclaration 1 ou la déclaration 2, **caractérisé par** un deuxième ventilateur (18) qui est disposé à proximité de l'extrémité du conduit d'air (13) quittant la poche d'eau (12).

6. Un lave-vaisselle (1) selon l'une quelconque des déclarations précédentes, **caractérisé par** un conduit de séchage (15) qui débouche sur la baignoire (3) à ses deux extrémités et qui est relié au ventilateur de séchage (10), un obturateur (16) qui dirige l'air provenant du conduit de séchage (15), et le conduit d'air (13) qui est relié à l'obturateur (16).

7. Un lave-vaisselle (1) selon l'une quelconque des déclarations ci-dessus, **caractérisé par** un chauffage supplémentaire (17) qui est disposé sur le conduit d'air (13).
